# EUROPEAN PATENT SPECIFICATION

(11) **EP 3 961 414 B1**
(45) Date of publication and mention of the grant of the patent: **05.07.2023**
(21) Application number: 18942537.4
(22) Date of filing: 04.12.2018
(51) Int. Cl.: G06F 16/22, G06F 7/32, G06F 16/21, G06F 16/25, G06F 11/34, G06F 16/2455, H04L 69/28

(54) **METHOD AND APPARATUS FOR PROCESSING TIME RECORDS**
VERFAHREN UND VORRICHTUNG ZUR VERARBEITUNG VON ZEITAUFZEICHNUNGEN
PROCÉDÉ ET APPAREIL DE TRAITEMENT DE RELEVÉS DE TEMPS

(43) Date of publication of application: 02.03.2022
(73) Proprietor: Hong Kong Sunstar Technology Co., Limited, Hong-Kong (HK)
(72) Inventor: PENG, Yihao, Beijing 100192 (CN)
(74) Representative: Pfenning, Meinig & Partner mbB
(86) International application number: PCT/CN2018/119220
(87) International publication number: WO 2020/113434

(56) References cited:
- CN-A- 1 975 725
- CN-A- 103 532 776
- US-A1- 2007 260 931

## Description

### FIELD OF TECHNOLOGY

The present application relates to the field of data processing, for example, to a method and an apparatus for processing a time record.

### BACKGROUND

Time records are a common data form. Electronic devices usually store a large number of time records. Moreover, there are also extensive time records stored and transmitted on the network. In this case, how to compress the data volume of time records has become the focus of people's concern.

US 2007/0260931A1 discloses a system and method for building merged events from log entries received from multiple devices. Multiple log events generally contribute to a single merged event. In the described embodiment, the mapping module receives log entries associated with specific merged events and maps them to fields in the merged event data structure in accordance with mapping properties. The described embodiments of the invention use regular expressions in the merge properties to describe values that are searched for in the received log entries. A described embodiment of the present invention gives the mapping module access to the event under construction. A new conditional operator, oneOf, is introduced that selects the first token that is bound to a value out of a list of tokens.

CN 1975725A discloses a log managing method and system, which includes: the management system maps records that have the same keyword segment to a combined record which is the data resource for searching; when receiving inquiry conditions from users, the management system finds the corresponding combined record in data resource according to the inquiry conditions, then retrieve the original log record from the combined record.

CN 103532776A discloses a service flow detection method and system. The method comprises the following steps of collecting the flow data of each piece of equipment; carrying out normalization processing on each piece of flow data to obtain an equipment data flow containing space information, time information and technical index information; on the basis of the space information, polymerizing the equipment data flow to obtain a service flow tree; according to the relationship between sub service data flow and the equipment data flow in the service flow tree as well as the equipment data flow, determining the sub service data flow; comparing the service data flow, the equipment data flow and a preset service behavior rule to obtain the abnormal state of the equipment data flow and the sub service data flow; according to the abnormal state of the equipment data flow, the abnormal state of the sub service data flow, the service flow tree, the abnormal weight of the preset equipment data flow and the abnormal weight of the preset sub service data flow, obtaining a main service health degree index; according to the main service health degree index, determining whether the main service data flow is abnormal or not. By adopting the scheme, the detection accuracy is improved.

### SUMMARY

An embodiment of the present disclosure provides a method for processing a time record. The method comprises: adjusting a time accuracy of a plurality of original time records to obtain a plurality of intermediate time records corresponding to a same time, wherein the time accuracy of the original time records is a first time accuracy, a time accuracy of the intermediate time records is a second time accuracy, and wherein the second time accuracy is lower than the first time accuracy; and combining the plurality of intermediate time records into one target time record, wherein each of the original time records is a single-object time record comprising one object identifier, the target time record is a multi-object time record comprising a plurality of object identifiers, different object identifiers in the plurality of original time records correspond to different times, and each of object identifiers in the target time record corresponds to the same time.

By adjusting the time accuracy of the original time record, the time records that are not able to be combined can be combined, such that the compression performance of the time record can be greatly improved while losing a certain extent of time accuracy.

In some implementations, the adjusting a time accuracy of the plurality of original time records to obtain a plurality of intermediate time records corresponding to a same time comprises rounding off the times in the plurality of original time records according to the second time accuracy, so as to obtain the plurality of intermediate time records.

In some implementations, a time length corresponding to the second time accuracy is greater than an update period of the original time records.

When the time length corresponding to the second time accuracy is greater than the update period of the original time records, the intermediate time records resulting from the accuracy adjustment either remain unchanged relative to the time records before the update, or are adjusted to a same time, such that most of or all of the intermediate time records can be combined into one target time record, thereby greatly reducing the data volume of the time records.

In some implementations, the plurality of original time records are time records that are updated relative to historical time records, object identifiers in the target time record are object identifiers in time records that are not updated relative to the historical time records, and wherein a number of the object identifiers in the time records that are updated relative to the historical time records is greater than a number of the object identifiers in the time records that are not updated relative to the historical time records.

Since the number of the object identifiers in the time records that are updated relative to the historical time records is greater than the number of the object identifiers in the time records that are not updated relative to the historical time records, by recording the object identifier in the time records that are not updated relative to the historical time records in the target time record, the time records that are updated relative to the historical time records can be obtained through inverse calculations (equivalent to recording the time records that are updated relative to the historical time records), and the data volume of the time records can be reduced.

In some implementations, the method further comprises: sending the target time record to a receiving end.

In some implementations, the sending the target time record to a receiving end comprises: compressing the target time record to obtain compressed data; and sending the compressed data to the receiving end.

In some implementations, the method further comprises: sending a time record deleted relative to the historical time records to the receiving end.

In some implementations, the deleted time record only comprises an object identifier.

An embodiment of the present disclosure further provides an apparatus for processing a time record, comprising: an adjusting module configured for adjusting a time accuracy of a plurality of original time records to obtain a plurality of intermediate time records corresponding to a same time, wherein the time accuracy of the original time records is a first time accuracy, a time accuracy of the intermediate time records is a second time accuracy, and wherein the second time accuracy is lower than the first time accuracy; and a combining module configured for combining the plurality of intermediate time records into one target time record, wherein each of the original time records is a single-object time record comprising one object identifier, the target time record is a multi-object time record comprising a plurality of object identifiers, different object identifiers in the plurality of original time records correspond to different times, and each of object identifiers in the target time record corresponds to the same time.

In some implementations, the adjusting module is configured for rounding off the times in the plurality of original time records according to the second time accuracy, so as to obtain the plurality of intermediate time records.

In some implementations, a time length corresponding to the second time accuracy is greater than an update period of the original time records.

In some implementations, the plurality of original time records are time records that are updated relative to historical time records, object identifiers in the target time record are object identifiers in time records that are not updated relative to the historical time records.

In some implementations, the apparatus further comprises: a first sending module configured for sending the target time record to a receiving end.

In some implementations, the first sending module is configured for compressing the target time record to obtain compressed data; and sending the compressed data to the receiving end.

In some implementations, the apparatus further comprises: a second sending module configured for sending a time record deleted relative to the historical time records to the receiving end.

In some implementations, the deleted time record only comprises an object identifier.

An embodiment of the present disclosure further provides a computer (such as a processor or a terminal) comprising the above-mentioned apparatus for processing a time record.

An embodiment of the present disclosure further provides an electronic device comprising: at least one processor; and a memory communicatively connected with the at least one processor, wherein the memory stores instructions executable by the at least one processor, which when executed by the at least one processor, cause the at least one processor to execute the above-mentioned method for processing a time record.

An embodiment of the present disclosure further provides a computer-readable storage medium storing computer-executable instructions configured for executing the above-mentioned method for processing a time record.

An embodiment of the present disclosure further provides a computer program product comprising a computer program stored on a computer-readable storage medium, wherein the computer program comprises program instructions, which when executed by a computer, cause the computer to execute the above-mentioned method for processing a time record.

### BRIEF DESCRIPTION OF THE DRAWINGS

One or more embodiments are exemplified by the accompanying drawings corresponding thereto. The exemplified descriptions and drawings do not limit the embodiments. Elements having the same reference numerals in the drawings are shown as similar elements. The drawings are not drawn to scale, in which:
FIG. 1 is an example diagram of an application scenario provided by an embodiment of the present disclosure;
FIG. 2 is another example diagram of an application scenario provided by an embodiment of the present disclosure;
FIG. 3 is a schematic flowchart of a method for processing a time record provided by one embodiment of the present disclosure;
FIG. 4 is a schematic flowchart of a possible implementation of step S320 of FIG. 3;
FIG. 5 is a schematic flowchart of a method for processing a time record according to another embodiment of the present disclosure;
FIG. 6 is a schematic flowchart of a method for processing a time record provided by another embodiment of the present disclosure;
FIG. 7 is a schematic flowchart of a processing flow of a sending end in a method for processing a time record provided by another embodiment of the present disclosure;
FIG. 8 is a schematic diagram of a processing flow of a receiving end corresponding to FIG. 7;
FIG. 9 is a schematic structural diagram of an apparatus for processing a time record provided by an embodiment of the present disclosure; and
FIG. 10 is a schematic structural diagram of an electronic device provided by an embodiment of the present disclosure.

### DESCRIPTION OF THE EMBODIMENTS

In order to provide a more detailed understanding of features and technical content of the embodiments of the present disclosure, implementations of the embodiments of the present disclosure are described in detail below with reference to the accompanying drawings. The appended drawings are provided merely for reference and description, and are not intended to limit the embodiments of the present disclosure. In the following technical description, for ease of explanation, a plurality of details are used to provide a thorough understanding of the disclosed embodiments However, one or more embodiments can still be implemented without these details. In other cases, in order to simplify the drawings, well-known structures and apparatuses can be displayed in a simplified manner.

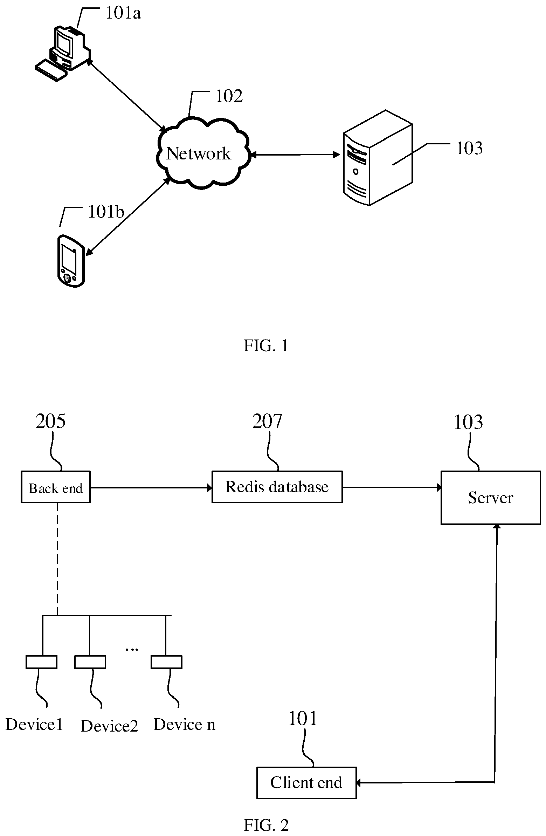

An application scenario of an embodiment of the present disclosure is exemplified below with reference to FIG. 1.

FIG. 1 shows a network system. The network system comprises a client end 101 and a server 103. The client end 101 and the server 103 can be communicatively connected to each other through a wired or wireless network 102.

The types of the client end 101 and the server 103 are not limited in the embodiments of the present disclosure. For example, the client end 101 can be a stationary terminal 101a or a mobile terminal 101b. In some embodiments, the client end 101 can also refer to software running on the terminal 101, such as a browser, a web page, or an APP running on the terminal 101. For ease of description, no matter which implementation manner is adopted, it is collectively referred to as a client end in the embodiments of the present disclosure. The type of the server 103 is also not limited in the embodiments of the present disclosure, and it may be an application server or a storage server.

The client end 101 and the server 103 can adopt various network protocols to transmit data, such as hypertext transfer protocol (HTTP) or websocket protocol.

The HTTP protocol is a network protocol supporting one-way communication. The server 103 sends data to the client end according to the request from the client end.

The websocket protocol is a network protocol supporting two-way communication. Based on the websocket protocol, the server 103 can send data to the client end according to the request from the client end, or initiatively send data (or push a message) to the client end 101.

A process of generation and transmission of a time record is exemplified below by taking FIG. 2 as an example.

As shown in FIG. 2, a back end (or referred to as a data source) 205 can obtain operating status information (such as CPU occupancy rate, memory occupancy rate of a device) of a monitored device (such as device 1 to device n as shown in FIG. 2). Furthermore, the operating status information of each device is written into a redis database 207 at a specific frequency (such as 15 seconds/time or 40 seconds/time). The redis database 207 can record the operating status information of the device in the form of a device list. The redis database 207 is only an example, and it may also be other types of databases, such as a memcached storage system or an NoSOL database. When the device list in the redis database is updated, a message can be pushed to a subscriber (such as the server 103) of the redis database to notify the subscriber that the information in the redis database has been updated.

The server 103 can establish a websocket service for monitoring a request from the client end 101. When the client end 101 is connected to the server 103, the server 103 can subscribe to operating status information of device 1 to device n to the redis database, so as to obtain a device list in which operating status information of each device is recorded. Next, the server 103 can transmit the device list to the client end 101. For example, the server 103 can first transmit an initial device list to the client end 101, the process of which can be referred to as first transmission. Each time the device list is updated, the server 103 can transmit the updated device list to the client end 101, the process of which can be referred to as retransmission or update transmission. The retransmission process can be performed once or for a plurality of times. In either first transmission or retransmission, the server 103 can transmit the device list according to the request from the client end 101, or initiatively push the device list to the client end 101.

The client end 101 (if the server 103 communicates with a client end based on the websocket protocol, then the client end may also be referred to as a websocket client or a websocket app) can display the device list on a page of the client end 101. In some embodiments, the client end 101 can also perform operations such as searching for information in the device list displayed on the page or sorting the device list.

Table I is an example of the device list:

**Table I**

| Device number | CPU occupancy rate | Memory occupancy load | Device temperature | Submit time |
|---|---|---|---|---|
| 1568 | 30% | 0.5 GB | 40 °C | 2018-05-10 11:21:42 |
| 1329 | 70% | 1 GB | 60 °C | 2018-05-10 11:22:01 |
| 3421 | 50% | 0.7 GB | 50 °C | 2018-05-10 11:20:01 |
| 4560 | 40% | 0.6 GB | 45 °C | 2018-05-10 11:20:23 |

Each row in Table I represents one record. The device number is a main field used to distinguish records of different devices. CPU occupancy rate, memory occupancy load and other fields are all data items.

In the above-mentioned device list, the device number and the submission time constitute the following time records:
(2018-05-10 11:21:42, 1568)
(2018-05-10 11:22:01, 1329)
(2018-05-10 11:20:01, 3421)
(2018-05-10 11:20:23, 4560).

Here, "1568", "1329", "3421" and "4560" are device numbers of different devices; "2018-05-10 11:21:42", "2018-05-10 11:22:01", "2018-05-10 11:20:01" and "2018-05-10 11:20:23" are respectively times corresponding to the above-mentioned devices (update times of operating statuses).

A time record can be provided in various forms, and the above is merely one example. A common time record usually comprises two basic elements: a time and an object identifier of an object to which the time belongs. The meanings of the time and the object identifier in the time record may vary in different application scenarios, which is not limited in the embodiments of the present disclosure. For example, in a system for monitoring an operating status of a device, the time in the time record may refer to the update time of the operating status of the monitored device, and the object identifier in the time record may refer to the device number of the monitored device.

In the above-mentioned example, "1568" in the time record (2018-05-10 11:22:33, 1568) is the object identifier of the time record, and "2018-05-10 11:22:33" is the time corresponding to the object identifier.

Assuming that the update frequency of the device list is 15 seconds, then the server 103 may generate a large number of time records every day, thereby consuming a lot of storage resources. Assuming that the server 103 wants to transmit the device list to the client end, then the transmission of tens of thousands of time records may also occupy a lot of network resources.

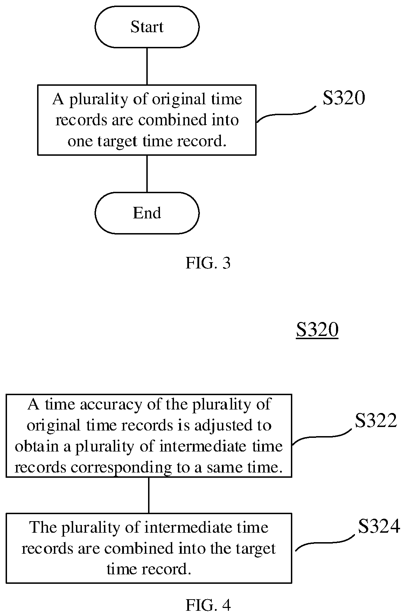

As shown in FIG. 3, an embodiment of the present disclosure provides a method for processing a time record, which can effectively compress a plurality of time records, thereby reducing the data volume occupied by the time record. The method in FIG. 3 can be executed by any device that has a demand for storage or transmission of time records. For example, the method can be executed by the server 103 described above.

As shown in FIG. 3, step S320 of combining a plurality of original time records into one target time record is included. Here, different object identifiers in the plurality of original time records correspond to different times, and each of object identifiers in the target time record corresponds to a same time.

Since the object identifiers in the plurality of original time records correspond to different times, the effect of compressing the plurality of original time records by using related technology is limited. In the embodiments of the present disclosure, it is equivalent to modifying the times in part of or all of the original records in the plurality of original records, such that the times in the modified time records turn into a same time, so that these modified time records can be combined together to form one target time record.

In some embodiments, the original time record can be a single-object time record comprising one object identifier. The combined target time record can be a multi-object time record comprising a plurality of object identifiers.

The object identifiers in the target time record can be the object identifiers in the plurality of original time records or other object identifiers that can be indexed to the object identifiers in the plurality of original time records, which is not limited in the embodiments of the present disclosure.

For example, assuming that the plurality of original time records are time records that are updated relative to historical time records. Then object identifiers in the target time record can be the object identifiers of the plurality of original time records or object identifiers in time records that are not updated relative to the historical time records. For example, when the number of object identifiers in the time records that are updated relative to the historical time records is greater than the number of object identifiers in the time records not updated relative to the historical time records, the object identifier in the target time record can be configured to be the object identifier in the time records that are not updated relative to the historical time records. Since the number of object identifiers in the time records that are updated relative to the historical time records is greater than the number of object identifiers in the time records not updated relative to the historical time records, by recording the object identifiers in the time records not updated relative to the historical time records in the target time record, indexing to the object identifiers in the time records that are updated relative to the historical time records can be implemented through inverse calculations, and the data volume of the time records can be reduced. The historical time record mentioned herein can be a time record that has been obtained before or a time record that has been sent to a receiving end before. For example, the historical time record can be a time record that is sent to the receiving end previously.

Step S320 can be implemented in various manners, which is not limited in the embodiments of the present disclosure. As one example, one time record can be selected from a plurality of original time records, and the time of the selected time record is used as the reference time. The times of the remaining original time records of the plurality of original time records are adjusted to the reference time.

As another example, as shown in FIG. 4, steps S322-S324 can be utilized to combine the plurality of original time records into one target time record.

In step S322, the time accuracy of the plurality of original time records is adjusted to obtain a plurality of intermediate time records corresponding to a same time.

The time accuracy of the original time records can be a first time accuracy, and the time accuracy of the intermediate time records can be a second time accuracy. Here, the second time accuracy is lower than the first time accuracy.

The configuration manner of the second time accuracy is not limited in the embodiments of the present disclosure. For example, if the first time accuracy is "1 second", then the second time accuracy can be configured as "1 minute" or "30 seconds".

Alternatively, in some embodiments, assuming that the original time records are time records updated on a periodic basis, then a time length corresponding to the second time accuracy can be configured to be greater than the update period of the original time records.

When the time length corresponding to the second time accuracy is greater than the update period of the original time records, the intermediate time records resulting from the accuracy adjustment either remain unchanged relative to the time records before the update, or are adjusted to a same time, such that most of or all of the intermediate time records can be combined into one target time record, thereby greatly reducing the data volume of the time records.

For example, assuming that the original time records are updated every 40 seconds, if the second time accuracy is greater than 40 seconds (for example, 1 minute), then the times of the adjusted intermediate time records either remain unchanged relative to the time records before the update, or are adjusted to the next minute.

The adjustment can be rounding off the times in the original time records according to the second time accuracy, or merely rounding down but not rounding up the times in the original time records according to the second time accuracy, or merely rounding up but not rounding down the times in the original time records according to the second time accuracy, which is not limited in the embodiments of the present disclosure.

In step S324, a plurality of intermediate time records are combined into a target time record.

For example, assuming that the original time records to be processed comprise the following time records:
(2018-05-10 11:21:42, 1568)
(2018-05-10 11:22:01, 1329)
(2018-05-10 11:20:01, 3421)
(2018-05-10 11:20:23, 4560).

The time accuracy of the above-mentioned original time records to be processed is "second" (corresponding to the first time accuracy mentioned above). In order to enable more time records to be combined together, the time accuracy of the original time record can be rounded off, such that the time accuracy of all of the time records is retained to "minute" (corresponding to the second time accuracy mentioned above). In this case, the following intermediate time records are obtained:
(2018-05-10 11:22:00, 1568)
(2018-05-10 11:22:00, 1329)
(2018-05-10 11:20:00, 3421)
(2018-05-10 11:20:00, 4560).

Among the above-mentioned intermediate time records, the first two intermediate time records correspond to a same time "2018-05-10 11:22:00", and the last two intermediate time records correspond to a same time "2018-05-10 11:20:00".

Then, the intermediate time records corresponding to a same time can be combined into one target time record. In this case, the following two target time records can be obtained:
(2018-05-10 11:22:00, {1329, 1568});
(2018-05-10 11:20:00, {3421, 4560}).

With the embodiments of the present disclosure, the data volume of time records can be reduced, thereby reducing the consumption of storage resources by the time records.

There are extensive time records transmitted on the network. For example, in a system for monitoring an operating status of a device as described in FIG. 1 and FIG. 2 above, the server will transmit a device list comprising a large number of time records to the client end over the network according to a request from the client end or in an initiative manner. If the number of devices is greater, then the data volume of time records included in the device list is larger. When the device list comprises records of tens of thousands of devices, the data volume of time records to be transmitted is also very large. In the case of limited network bandwidth and user data traffic, a large number of time records may not be transmitted to the receiving end quickly and accurately.

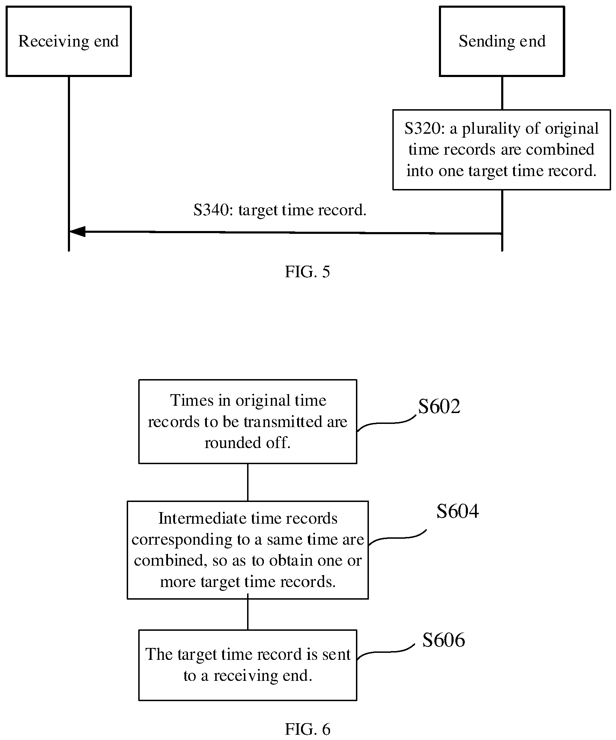

In order to solve the above-mentioned problem, as shown in FIG. 5, a plurality of original time records to be transmitted can be compressed into one target time record by adopting step S320 described above before transmitting the time records to the receiving end. Next, in step S340, the target time record is transmitted to the receiving end. The sending end and the receiving end are not limited in the embodiments of the present disclosure. For example, the sending end can be the server 103 shown in FIG. 1 or FIG. 2, and the receiving end can be the client end shown in FIG. 1 or FIG. 2. Alternatively, in some embodiments, the sending end can be a client end, and the receiving end can be a server; alternatively, in some embodiments, the sending end and the receiving end can also be other types of network devices requiring transmission of a time record.

Compared with the traditional way of transmitting a time record, the way of transmitting a time record shown in FIG. 5 can effectively reduce the consumption of network resources (for example, network bandwidth) or data traffic during transmission of a time record, such that the time record can be transmitted to the receiving end quickly and accurately.

In a scenario where a time record is transmitted over the network, if the time record is updated in real time, then a sending end often transmits an original time record to a receiving end at first, the process of which can be referred to as first transmission of the time record. Then, when the time record is updated, the sending end will retransmit the updated time record to the receiving end, the process of which can be referred to as retransmission or update transmission of the time record. FIG. 2 in the previous text takes a device list as an example to give an example of first transmission and retransmission of a time record. For detailed information, please refer to the previous text.

Both first transmission of a time record and retransmission of a time record can be performed in the manner shown in FIG. 5. A sending end can perform retransmission in the same manner as first transmission, that is, transmit a complete time record to a receiving end. Alternatively, a sending end can transmit a time records that are updated relative to a historical time record to a receiving end and do not transmit a time record that is not updated relative to the historical time record to the receiving end. In addition, the sending end can also transmit one or more of a newly added time record and a deleted time record to a receiving end.

For transmission of a deleted time record, a time record transmitted to a receiving end can comprise an object identifier instead of a time, so as to reduce the data volume of the time record to be transmitted.

A first transmission process of a time record will be described in more detail below with reference to FIG. 6. Here, steps in FIG. 6 are performed by a sending end.

In step S602, a time in an original time record to be transmitted is rounded off.

For example, assuming that an acceptable time error of a receiving end is one minute, then the number of seconds of the time in the original time record can be rounded off and retained to an accuracy level of minutes. Alternatively, if the acceptable time error of the receiving end is 30 seconds, then the number of seconds of the time in the original time record can be rounded off and retained to an accuracy level of 30 seconds.

Assuming that the original time records to be transmitted are as follows:
(2018-05-10 11:21:42, 1568)
(2018-05-10 11:22:01, 1329)
(2018-05-10 11:20:01, 3421)
(2018-05-10 11:20:23, 4560).

After the times in the original time records are retained to the accuracy level of minutes, the following intermediate time records are obtained:
(2018-05-10 11:22:00, 1568)
(2018-05-10 11:22:00, 1329)
(2018-05-10 11:20:00, 3421)
(2018-05-10 11:20:00, 4560).

In step S604, the intermediate time records corresponding to a same time are combined to obtain one or more target time records.

For example, assuming that the intermediate time records are as follows:
(2018-05-10 11:22:00, 1568)
(2018-05-10 11:22:00, 1329)
(2018-05-10 11:20:00, 3421)
(2018-05-10 11:20:00, 4560).
(2018-05-10 11:30:00, 2356)

Then the target time records obtained through the combination are as follows:
(2018-05-10 11:22:00, {1329, 1568})
(2018-05-10 11:20:00, {3421, 4560})
(2018-05-10 11:30:00, 2356).

In step S606, the target time record is sent to the receiving end. It can be seen that compared with the original time record to be transmitted, the transmission of the target time record greatly reduces the data volume of the time record to be transmitted.

For the receiving end, it is sufficient to restore the target time record comprising a plurality of object identifiers to obtain a single-object time record.

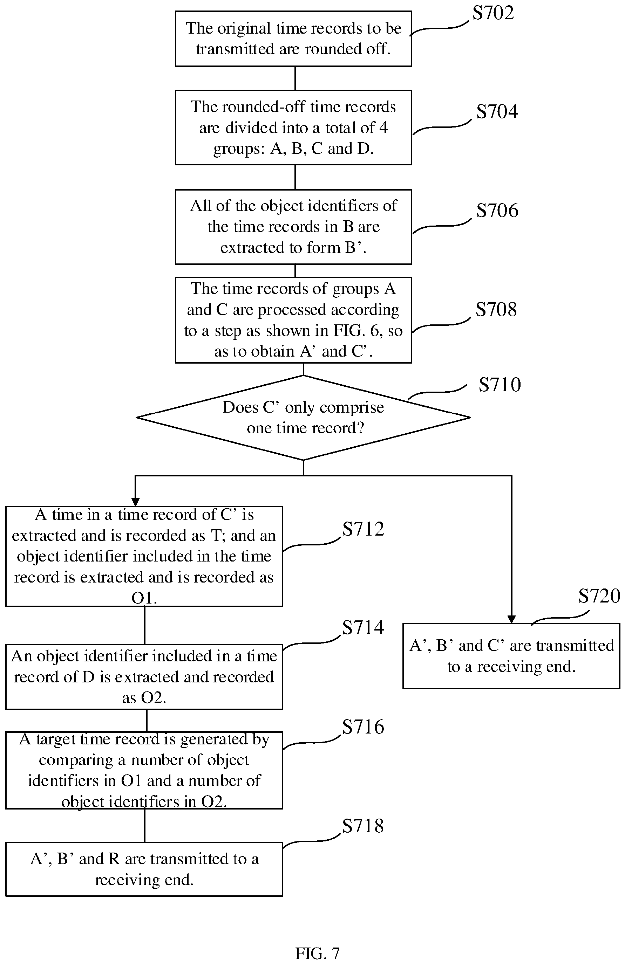

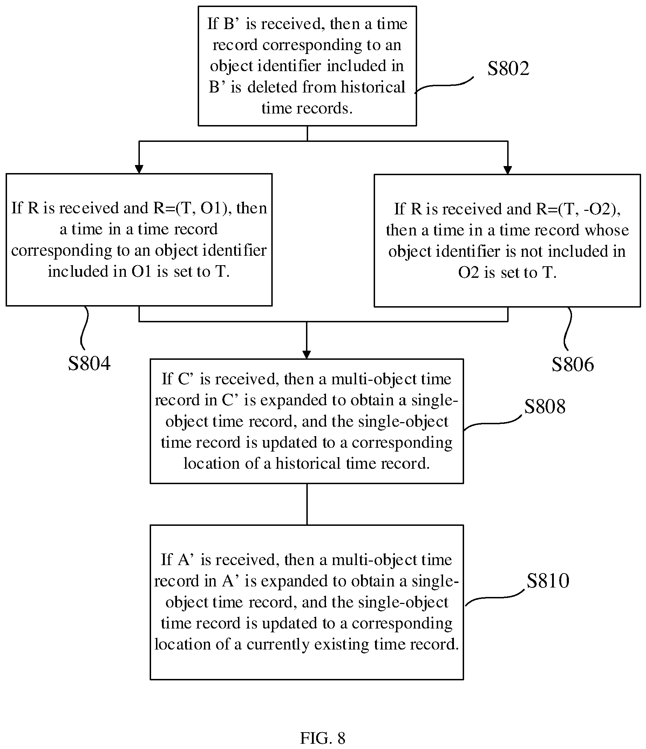

A retransmission process of a time record will be exemplified in more detail below with reference to FIGS. 7 to 8. Here, a flow of FIG. 7 is performed by a sending end, and a flow of FIG. 8 is performed by a receiving end.

In step S702, an original time record to be transmitted is rounded off.

Assuming that the original time records to be transmitted are as follows:
(2018-05-10 11:23:15, 340)
(2018-05-10 11:23:21, 1568)
(2018-05-10 11:22:57, 1329)
(2018-05-10 11:20:03, 3421)
(2018-05-10 11:23:09, 4560).

The original time records to be transmitted can be rounded off, such that the time in these time records can be accurate to minutes, and thus obtaining the following:
(2018-05-10 11:23:00, 340)
(2018-05-10 11:23:00, 1568)
(2018-05-10 11:23:00, 1329)
(2018-05-10 11:20:00, 3421)
(2018-05-10 11:23:00, 4560).

In step S704, the rounded-off time records are divided into 4 groups: A, B, C and D.
A: Time records newly added relative to a historical time record;
B: Time records deleted relative to a historical time record;
C: Time records that are updated relative to a historical time record;
D: Time records that are not updated relative to a historical time record.

In this example, a historical time record refers to a time record that is previously transmitted, which, however, is not limited in the embodiments of the present disclosure. The sending end can use any time record transmitted previously as a historical time record, provided that the receiving and the sending end reach an agreement in advance.

Assuming that the historical time records are as follows:
(2018-05-10 11:22:00, 1568)
(2018-05-10 11:22:00, 1329)
(2018-05-10 11:20:00, 3421)
(2018-05-10 11:20:00, 4560)
(2018-05-10 11:30:00, 2356).

By comparing the historical time records with the rounded-off time records obtained from step S702, the following 4 groups of time records can be obtained:
A=(2018-05-10 11:23:00, 340);
B=(2018-05-10 11:30:00, 2356);
C=(2018-05-10 11:23:00, 1568), (2018-05-10 11:23:00, 1329), (2018-05-10 11:23:00, 4560);
D=(2018-05-10 11:20:00, 3421).

In step S706, all of the object identifiers of the time record in B are extracted to form B'. For example, B' can be represented in the form of "-{b1, b2, b3, ...}", where b1, b2, b3 are object identifiers, and "-" means deletion. This way of representation omits transmission of the time of the deleted time record, thereby reducing the data volume of the time record to be transmitted.

For example, by processing B=(2018-05-10 11:30:00, 2356) according to step S706, B'=-{2356} can be obtained.

In step S708, the time records of A and C are processed according to the step shown in FIG. 6 to obtain A' and C'.

For example, A=(2018-05-10 11:23:00, 340) and C=(2018-05-10 11:23:00, 1568), (2018-05-10 11:23: 00, 1329), (2018-05-10 11:23:00, 4560) are processed according to step S708 to obtain:
A'=(2018-05-10 11:23:00, 340).
C'=(2018-05-10 11:23:00, {1568, 1329, 4560}).

In step S710, if C' comprises one time record, then the process skips to step S712. If C' comprises a plurality of time records, then the process skips to step S720.

For example, if C'=(2018-05-10 11:23:00, {1568, 1329, 4560}), which comprises one time record, then the process skips to step S712 next.

In step S712, the time in the time record in C' is extracted and denoted as T; and the object identifier included in the time record is extracted and denoted as O1.

For example, C'=(2018-05-10 11:23:00, {1568, 1329, 4560}), after step S712 is performed, then the following result is obtained:
T=2018-05-10 11:23:00;
O1={ 1568, 1329, 4560}.

In step S714, the object identifier included in the time record in D is extracted and denoted as O2.

For example, D=(2018-05-10 11:20:00, 3421), after step S714 is performed, the following result is obtained: O2={3421}.

In step S716, a target time record is generated by comparing a number of object identifiers in O1 and a number of object identifiers in O2. If the number of object identifiers in O1 is lower than the number of object identifiers in O2, then one target time record R=(T, O1) is generated; otherwise, a target time record R=(T, -O2) is generated.

For example, by comparing O2={3421} and O1={ 1568, 1329, 4560}, it can be seen that the number of object identifiers in O2 is lower than the number of object identifiers in O1, and thus after step S716 is performed, the target time record R=(2018-05-10 11:23:00, -{3421}) is obtained.

In step S718, A', B' and R are transmitted to the receiving end.

Therefore, after step S718 is performed, the following time records are transmitted by the sending end to the receiving end:
A'=(2018-05-10 11:23:00, 340);
B'=-{2356};
R=(2018-05-10 11:23:00, -{3421}).

In step S720, A', B' and C' are transmitted to the receiving end.

FIG. 8 shows a processing flow of a receiving end in a retransmission process.

In step S802, if B' is received, then a time record corresponding to an object identifier included in B' is removed from historical time records.

For example, assuming that time records (i.e., historical time records) obtained from previous transmission are:
(2018-05-10 11:22:00, 1568)
(2018-05-10 11:22:00, 1329)
(2018-05-10 11:20:00, 3421)
(2018-05-10 11:20:00, 4560)
(2018-05-10 11:30:00, 2356).

Time records received this time are as follows:
A'=(2018-05-10 11:23:00, 340);
B'=-{2356};
R=(2018-05-10 11:23:00, -{3421}).

After step S802 is performed, (2018-05-10 11:30:00, 2356) can be removed from the time records, and the remaining time records are as follows:
(2018-05-10 11:22:00, 1568)
(2018-05-10 11:22:00, 1329)
(2018-05-10 11:20:00, 3421)
(2018-05-10 11:20:00, 4560).

In step S804, if R is received and R=(T, O1), then the time in the time record corresponding to the object identifier included in O1 is set to T.

In step S806, if R is received and R=(T, -O2), then the time in the time record whose object identifier is not in O2 is set to T.

For example, the format of R=(2018-05-10 11:23:00, -{3421}) conforms to R=(T, -O2). Therefore, step S806 is performed to change all of the times in time records whose object identifier is not "3421" in historical time records to "2018-05-10 11:23:00", and the following result is obtained:
(2018-05-10 11:23:00, 1568)
(2018-05-10 11:23:00, 1329)
(2018-05-10 11:20:00, 3421)
(2018-05-10 11:23:00, 4560).

In step S808, if C' is received, a multi-object time record in C' is expanded to obtain a single-object time record and the single-object time record is updated to a corresponding location of the historical time record.

In step S810, if A' is received, then a multi-object time record in A' is expanded to obtain a single-object time record, and the single-object time record is updated to a corresponding location of the currently existing time record.

For example, A'=(2018-05-10 11:23:00, 340) can be added to the currently existing time record, and the following result is obtained:
(2018-05-10 11:23:00, 1568)
(2018-05-10 11:23:00, 1329)
(2018-05-10 11:20:00, 3421)
(2018-05-10 11:23:00, 4560)
(2018-05-10 11:23:00, 340).

In the previous text, time is mainly represented in the format of "year-month-day hour: minute: second", and object identifier is represented using Arabic numerals, which are not limited in the embodiments of the present disclosure.

For example, a time can be represented in a digital time representation manner, for example, a time is represented by a unix timestamp. Alternatively, a time and an object identifier can be represented in a binary manner.

In the method for processing a time record provided by the embodiment of the present disclosure, the data volume of the time record is compressed to obtain the target time record. In some embodiments, the target time record can be further compressed by adopting a general compression algorithm, so as to further greatly reduce the data volume of the time record.

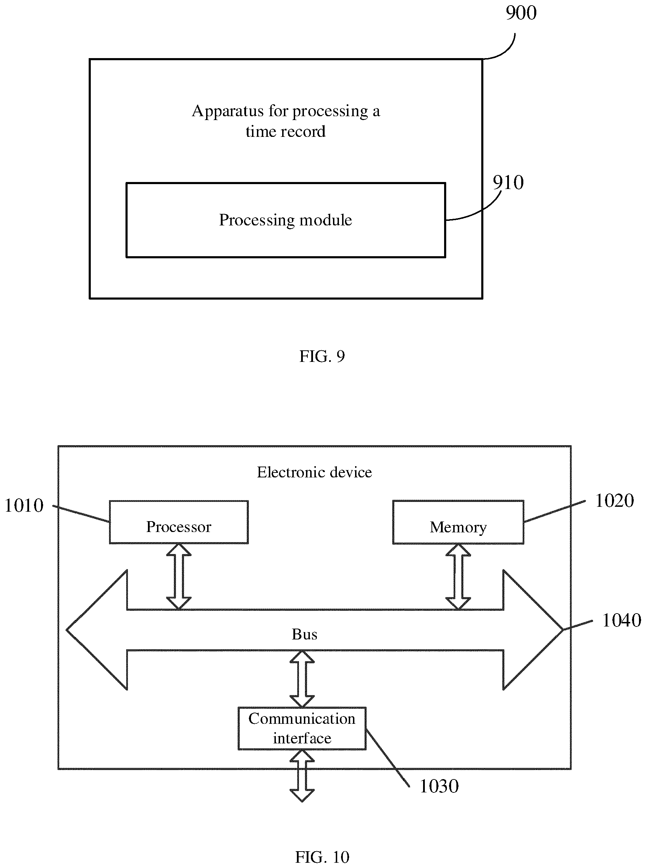

The method embodiments of the present disclosure are described in detail above with reference to FIGS. 1 to 8. The apparatus embodiments of the present disclosure will be described in detail below with reference to FIGS. 9 to 10. The description of the method embodiments corresponds to the description of the apparatus embodiments. Therefore, the parts that are not described in detail can refer to the method embodiments provided above.

The embodiment of the present disclosure further provides an apparatus for processing a time record. As shown in FIG. 9, the apparatus 900 comprises a processing module 910.

The processing module 910 is configured for combining a plurality of original time records into one target time record. Here, different object identifiers in the plurality of original time records correspond to different times, and each of object identifiers in the target time record corresponds to a same time.

Alternatively, the processing module 910 can comprise: an adjusting module and a combining module. The adjusting module is configured for adjusting a time accuracy of the plurality of original time records to obtain a plurality of intermediate time records corresponding to a same time, wherein a time accuracy of the original time records is a first time accuracy, a time accuracy of the intermediate time records is a second time accuracy, and wherein the second time accuracy is lower than the first time accuracy. The combining module is configured for combining the plurality of intermediate time records into the target time record.

Alternatively, the adjusting module is configured for rounding off the times in the plurality of original time records according to the second time accuracy, so as to obtain the plurality of intermediate time records.

Alternatively, a time length corresponding to the second time accuracy is greater than an update period of the original time records.

Alternatively, the plurality of original time records are time records that are updated relative to historical time records, object identifiers in the target time record are object identifiers in time records that are not updated relative to the historical time records.

Alternatively, the apparatus 900 can further comprise a first sending module configured for sending the target time record to a receiving end.

Alternatively, the first sending module is configured for compressing the target time record to obtain compressed data; and sending the compressed data to the receiving end.

Alternatively, the apparatus 900 can further comprise a second sending module configured for sending a time record deleted relative to the historical time records to the receiving end.

Alternatively, the deleted time record only comprises an object identifier.

An embodiment of the present disclosure further provides a computer-readable storage medium storing computer-executable instructions configured for executing the above-mentioned method for processing a time record.

An embodiment of the present disclosure further provides a computer program product comprising a computer program stored on a computer-readable storage medium, wherein the computer program comprises program instructions, which when executed by a computer, cause the computer to execute the above-mentioned method for processing a time record.

The above-mentioned computer-readable storage medium can be a transitory computer-readable storage medium or a non-transitory computer-readable storage medium.

An embodiment of the present disclosure further provides an electronic device having a structure as shown in FIG. 10. The electronic device comprises:
at least one processor 1010, wherein FIG. 10 shows one processor 1010 as an example; and a memory 1020. The electronic device can further comprise a communication interface1030 and a bus 1040. Here, the processor 1010, the communication interface 1030, and the memory 1020 can communicate with each other through the bus 1040. The communication interface 1030 can be used for information transmission. The processor 1010 can call logic instructions in the memory 1020 to execute the method for processing a time record in the above-mentioned embodiment.

In addition, the above-mentioned logical instructions in the memory 1020 can be implemented in the form of a software functional unit, and when sold or used as an independent product, they can be stored in a computer-readable storage medium.

As a computer-readable storage medium, the memory 1020 can be used to store software programs and computer-executable programs, such as program instructions/modules corresponding to the method in the embodiments of the present disclosure. The processor 1010 executes functional applications and data processing by running software programs, instructions, and modules stored in the memory 1020, that is, implements the method for processing a time record in the foregoing method embodiment.

The memory 1020 can comprise a program storage area and a data storage area, wherein the program storage area can store an operating system and an application program required by at least one function; and the data storage area can store data created according to the use of a terminal device or the like. In addition, the memory 1020 can comprise a high-speed random access memory, and can also comprise a non-volatile memory.

In some embodiments, the above-mentioned time record can be a time record in a device list. The device list can be a processing device for a "digital certificate". When the digital certificate is related to or embodied as a digital currency, and the digital certificate processing device can be a digital currency mining machine. The digital currency can be an encrypted currency such as Bitcoin.

The technical solution of the embodiment of the present disclosure can be embodied in the form of a software product. The computer software product is stored in one storage medium and comprises one or more instructions to enable one computer device (which can be a personal computer, a server, or a network device, etc.) to perform all of or part of the steps of the method described in the embodiments of the present disclosure. The foregoing storage medium can be a non-transitory storage medium, including: a medium that can store program codes, such as a U disk, a mobile hard disk, a read-only memory (ROM), a random access memory (RAM), a magnetic disk or optical disk, etc. A medium that can store program codes, or a transient storage medium.

When used in the present application, although terms "first", "second" or the like can be used in the present application to describe various elements, these elements should not be limited by these terms. These terms are only used to distinguish one element from another element. For example, without changing the meaning of the description, a first element can be called a second element, and likewise, a second element can be called a first element, provided that all of the "first elements" appeared are renamed consistently and all of the "second elements" appeared are renamed consistently. Both the first element and the second element are elements, but they can not be the same element.

The wording used in the present application is only used to describe the embodiment and is not used to limit the claims. As used in the description of the embodiment and in the claims, unless clearly indicated otherwise in the context, singular forms "a", "an" and "the" are intended to also comprise plural forms. Similarly, the term "and/or" as used in the embodiments of the present disclosure refers to any and all possible combinations comprising one or more of the associated listed items. In addition, when used in the embodiments of the present disclosure, the term "comprise" and its variations "comprises" and/or comprising or the like indicate the presence of the stated features, entireties, steps, operations, elements and/or components, but do not exclude the presence or addition of one or more other features, entireties, steps, operations, elements, components and/or groups thereof.

Various aspects, implementation manners, implementations or features in the described embodiment can be used alone or in any combination. Each of aspects in the described embodiment can be implemented by software, hardware, or a combination of software and hardware. The described embodiment can also be embodied by a computer-readable medium storing computer-readable codes, and the computer-readable codes comprise instructions executable by at least one computing apparatus. The computer-readable medium can be associated with any data storage apparatus capable of storing data readable by a computer system. Examples of the computer-readable medium can comprise a read-only memory, a random access memory, a CD-ROM, an HDD, a DVD, a magnetic tape, an optical data storage apparatus or the like. The computer-readable medium can also be distributed in computer systems connected through a network, such that the computer-readable codes can be stored and executed in a distributed manner.

The above-mentioned technical description can refer to the drawings, which form a part of the embodiments of the present disclosure; and implementations according to the described embodiments are shown in the drawings through the description. Although these embodiments are described in sufficient detail to enable those skilled in the art to implement these embodiments, these embodiments are non-limiting. In this way, other embodiments can be used, and modifications can be made without departing from the scope of the described embodiments. For example, the sequence of operations described in the flowchart is non-limiting, so the sequence of two or more operations explained in the flowchart and described according to the flowchart can be changed according to several embodiments. As another example, in several embodiments, one or more operations illustrated in the flowchart and described according to the flowchart are optional or can be deleted. In addition, some steps or functions can be added to the disclosed embodiments, or two or more step sequences can be replaced.

In addition, a term is used in the above-mentioned technical description to provide a thorough understanding of the described embodiment. However, too specific details are not required to implement the described embodiment. Therefore, the above-mentioned description of the embodiment is presented for explanation and description. The embodiments presented in the above-mentioned description and the example disclosed according to these embodiments are provided separately to enrich the context and help understand the described embodiments. The above-mentioned description is not intended to be exhaustive or to limit the described embodiments to the precise form of the present disclosure. The invention is defined by the appended claims.

In some cases, well-known processing steps are not described in detail to avoid unnecessarily affecting the described embodiment.

## Claims

1. A method for processing a time record, comprising
adjusting (S322) a time accuracy of a plurality of original time records to obtain a plurality of intermediate time records corresponding to a same time, wherein the time accuracy of the original time records is a first time accuracy, a time accuracy of the intermediate time records is a second time accuracy, and wherein the second time accuracy is lower than the first time accuracy; and
combining (S324) the plurality of intermediate time records into one target time record, wherein each of the original time records is a single-object time record comprising one object identifier, the target time record is a multi-object time record comprising a plurality of object identifiers, different object identifiers in the plurality of original time records correspond to different times, and each of object identifiers in the target time record corresponds to the same time.

2. The method according to claim 1, wherein the adjusting (S322) a time accuracy of a plurality of original time records to obtain a plurality of intermediate time records corresponding to a same time comprises:
rounding off the times in the plurality of original time records according to the second time accuracy, so as to obtain the plurality of intermediate time records.

3. The method according to claim 1 or 2, wherein a time length corresponding to the second time accuracy is greater than an update period of the original time records.

4. The method according to any one of claims 1-3, wherein the plurality of original time records are time records that are updated relative to historical time records, object identifiers in the target time record are object identifiers in time records that are not updated relative to the historical time records, and wherein a number of the object identifiers in the time records that are updated relative to the historical time records is greater than a number of the object identifiers in the time records that are not updated relative to the historical time records.

5. The method according to any one of claims 1-4, further comprising:
sending (S340) the target time record to a receiving end.

6. The method according to claim 5, wherein the sending (S340) the target time record to a receiving end comprises:
compressing the target time record to obtain compressed data; and
sending the compressed data to the receiving end.

7. The method according to any one of claims 1-6, further comprising:
sending a time record deleted relative to the historical time records to the receiving end.

8. The method according to claim 7, wherein the deleted time record only comprises an object identifier.

9. An apparatus (900) for processing a time record, comprising
an adjusting module configured for adjusting a time accuracy of a plurality of original time records to obtain a plurality of intermediate time records corresponding to a same time, wherein each of the time accuracy of the original time records is a first time accuracy, a time accuracy of the intermediate time records is a second time accuracy, and wherein the second time accuracy is lower than the first time accuracy; and
a combining module configured for combining the plurality of intermediate time records into one target time record, wherein each of the original time records is a single-object time record comprising one object identifier, the target time record is a multi-object time record comprising a plurality of object identifiers, different object identifiers in the plurality of original time records correspond to different times, and each of object identifiers in the target time record corresponds to the same time.

10. The apparatus (900) according to claim 9, wherein the adjusting module is configured for rounding off times in the plurality of original time records according to the second time accuracy, so as to obtain the plurality of intermediate time records.

11. The apparatus (900) according to claim 9 or 10, wherein a time length corresponding to the second time accuracy is greater than an update period of the original time records.

12. The apparatus (900) according to any one of claims 9-11, wherein the plurality of original time records are time records that are updated relative to historical time records, object identifiers in the target time record are object identifiers in time records that are not updated relative to the historical time records, and wherein a number of the object identifiers in the time records that are updated relative to the historical time records is greater than a number of the object identifiers in the time records that are not updated relative to the historical time records.

13. The apparatus (900) according to any one of claims 9-12, further comprising: a first sending module configured for sending the target time record to a receiving end.

## Patentansprüche

1. Verfahren zur Verarbeitung eines Zeitdatensatzes, umfassend:
Einstellen (S322) einer Zeitgenauigkeit einer Vielzahl von Ursprungs-Zeitdatensätzen zum Erhalten einer Vielzahl von Zwischen-Zeitdatensätzen, die einer gleichen Zeit entsprechen, wobei die Zeitgenauigkeit der Ursprungs-Zeitdatensätze eine erste Zeitgenauigkeit ist, eine Zeitgenauigkeit der Zwischen-Zeitdatensätze eine zweite Zeitgenauigkeit ist, und wobei die zweite Zeitgenauigkeit niedriger ist als die erste Zeitgenauigkeit; und
Kombinieren (S324) der Vielzahl von Zwischen-Zeitdatensätzen zu einem Ziel-Zeitdatensatz, wobei jeder der Ursprungs-Zeitdatensätze ein Einzelobjekt-Zeitdatensatz ist, der einen Objektidentifikator umfasst, der Ziel-Zeitdatensatz ein Mehrfachobjekt-Zeitdatensatz ist, der eine Vielzahl von Objektidentifikatoren umfasst, verschiedene Objektidentifikatoren in der Vielzahl von Ursprungs-Zeitdatensätzen verschiedenen Zeiten entsprechen und jeder der Objektidentifikatoren im Ziel-Zeitdatensatz der gleichen Zeit entspricht.

2. Verfahren nach Anspruch 1, wobei das Einstellen (S322) einer Zeitgenauigkeit einer Vielzahl von Ursprungs-Zeitdatensätzen zum Erhalten eine Vielzahl von Zwischen-Zeitdatensätzen, die einer gleichen Zeit entsprechen, umfasst:
Abrunden der Zeiten in der Vielzahl von Ursprungs-Zeitdatensätzen entsprechend der zweiten Zeitgenauigkeit zum Erhalten der Vielzahl von Zwischen-Zeitdatensätzen.

3. Verfahren nach Anspruch 1 oder 2, wobei eine Zeitlänge, die der zweiten Zeitgenauigkeit entspricht, größer ist als eine Aktualisierungsperiode der Ursprungs-Zeitdatensätze.

4. Verfahren nach einem der Ansprüche 1 bis 3, wobei die Vielzahl von Ursprungs-Zeitdatensätzen Zeitdatensätze sind, die relativ zu historischen Zeitdatensätzen aktualisiert werden, Objektidentifikatoren im Ziel-Zeitdatensatz Objektidentifikatoren in Zeitdatensätzen sind, die relativ zu den historischen Zeitdatensätzen nicht aktualisiert werden, und wobei eine Anzahl der Objektidentifikatoren in den Zeitdatensätzen, die relativ zu den historischen Zeitdatensätzen aktualisiert werden, größer ist als eine Anzahl der Objektidentifikatoren in den Zeitdatensätzen, die relativ zu den historischen Zeitdatensätzen nicht aktualisiert werden.

5. Verfahren nach einem der Ansprüche 1 bis 4, ferner umfassend:
Senden (S340) des Ziel-Zeitdatensatzes an eine Empfangsseite.

6. Verfahren nach Anspruch 5, wobei das Senden (S340) des Ziel-Zeitdatensatzes an eine Empfangsseite umfasst:
Komprimieren des Ziel-Zeitdatensatzes zum Erhalten von komprimierten Daten; und
Senden der komprimierten Daten an die Empfangsseite.

7. Verfahren nach einem der Ansprüche 1 bis 6, ferner umfassend:
Senden eines Zeitdatensatzes, der relativ zu den historischen Zeitdatensätzen gelöscht wurde, an die Empfangsseite.

8. Verfahren nach Anspruch 7, wobei der gelöschte Zeitdatensatz nur einen Objektidentifikator umfasst.

9. Vorrichtung (900) zur Verarbeitung eines Zeitdatensatzes, umfassend:
ein Einstellmodul, das dafür ausgelegt ist, eine Zeitgenauigkeit einer Vielzahl von Ursprungs-Zeitdatensätzen zum Erhalten einer Vielzahl von Zwischen-Zeitdatensätzen, die einer gleichen Zeit entsprechen, einzustellen, wobei jede der Zeitgenauigkeiten der Ursprungs-Zeitdatensätze eine erste Zeitgenauigkeit ist, eine Zeitgenauigkeit der Zwischen-Zeitdatensätze eine zweite Zeitgenauigkeit ist, und wobei die zweite Zeitgenauigkeit niedriger ist als die erste Zeitgenauigkeit; und
ein Kombiniermodul, das dafür ausgelegt ist, die Vielzahl von Zwischen-Zeitdatensätzen zu einem Ziel-Zeitdatensatz zu kombinieren, wobei jeder der Ursprungs-Zeitdatensätze ein Einzelobjekt-Zeitdatensatz ist, der einen Objektidentifikator umfasst, der Ziel-Zeitdatensatz ein Mehrfachobjekt-Zeitdatensatz ist, der eine Vielzahl von Objektidentifikatoren umfasst, verschiedene Objektidentifikatoren in der Vielzahl von Ursprungs-Zeitdatensätzen verschiedenen Zeiten entsprechen und jeder der Objektidentifikatoren im Ziel-Zeitdatensatz der gleichen Zeit entspricht.

10. Vorrichtung (900) nach Anspruch 9, wobei das Einstellmodul dafür ausgelegt ist, Zeiten in der Vielzahl von Ursprungs-Zeitdatensätzen entsprechend der zweiten Zeitgenauigkeit zum Erhalten der Vielzahl von Zwischen-Zeitdatensätzen abzurunden.

11. Vorrichtung (900) nach Anspruch 9 oder 10, wobei eine Zeitlänge, die der zweiten Zeitgenauigkeit entspricht, größer ist als eine Aktualisierungsperiode der Ursprungs-Zeitdatensätze.

12. Vorrichtung (900) nach einem der Ansprüche 9 bis 11, wobei die Vielzahl von Ursprungs-Zeitdatensätzen Zeitdatensätze sind, die relativ zu historischen Zeitdatensätzen aktualisiert werden, Objektidentifikatoren im Ziel-Zeitdatensatz Objektidentifikatoren in Zeitdatensätzen sind, die relativ zu den historischen Zeitdatensätzen nicht aktualisiert werden, und wobei eine Anzahl der Objektidentifikatoren in den Zeitdatensätzen, die relativ zu den historischen Zeitdatensätzen aktualisiert werden, größer ist als eine Anzahl der Objektidentifikatoren in den Zeitdatensätzen, die relativ zu den historischen Zeitdatensätzen nicht aktualisiert werden.

13. Vorrichtung (900) nach einem der Ansprüche 9 bis 12, ferner umfassend:
ein erstes Sendemodul, das dafür ausgelegt ist, den Ziel-Zeitdatensatz an eine Empfangsseite zu senden.

## Revendications

1. Procédé de traitement d'un relevé de temps, comprenant :
l'ajustement (S322) d'une précision temporelle d'une pluralité de relevés de temps originaux pour obtenir une pluralité de relevés de temps intermédiaires correspondant à un même temps, dans lequel la précision temporelle des relevés de temps originaux est une première précision temporelle, une précision temporelle des relevés de temps intermédiaires est une seconde précision temporelle, et dans lequel la seconde précision temporelle est inférieure à la première précision temporelle ; et
la combinaison (S324) de la pluralité de relevés de temps intermédiaires en un seul relevé de temps cible, dans lequel chacun des relevés de temps originaux est un relevé de temps d'objet unique comprenant un identifiant d'objet, le relevé de temps cible est un relevé de temps multi-objets comprenant une pluralité d'identifiants d'objets, différents identifiants d'objets dans la pluralité de relevés de temps originaux correspondent à des temps différents, et chacun des identifiants d'objets dans le relevé de temps cible correspond au même temps.

2. Procédé selon la revendication 1, dans lequel l'ajustement (S322) d'une précision temporelle d'une pluralité de relevés de temps originaux pour obtenir une pluralité de relevés de temps intermédiaires correspondant à un même temps comprend :
l'arrondi des temps dans la pluralité de relevés de temps originaux conformément à la seconde précision temporelle, de manière à obtenir la pluralité de relevés de temps intermédiaires.

3. Procédé selon la revendication 1 ou 2, dans lequel une durée correspondant à la seconde précision temporelle fois est supérieure à une période de mise à jour des relevés de temps originaux.

4. Procédé selon l'une quelconque des revendications 1 à 3, dans lequel la pluralité de relevés de temps originaux se compose de relevés de temps qui sont mis à jour par rapport à des relevés de temps historiques, les identifiants d'objets dans le relevé de temps cible sont des identifiants d'objets dans des relevés de temps qui ne sont pas mis à jour par rapport aux relevés de temps historiques, et dans lequel un nombre d'identifiants d'objets dans les relevés de temps qui sont mis à jour par rapport aux relevés de temps historiques est supérieur à un nombre d'identifiants d'objets dans les relevés de temps qui ne sont pas mis à jour par rapport aux relevés de temps historiques.

5. Procédé selon l'une quelconque des revendications 1 à 4, comprenant en outre :
l'envoi (S340) du relevé de temps cible à une extrémité de réception.

6. Procédé selon la revendication 5, dans lequel l'envoi (S340) du relevé de temps cible à une extrémité de réception comprend :
la compression du relevé de temps cible pour obtenir des données compressées ; et
l'envoi des données compressées à l'extrémité de réception.

7. Procédé selon l'une quelconque des revendications 1 à 6, comprenant en outre :
l'envoi d'un relevé de temps supprimé par rapport aux relevés de temps historiques à l'extrémité de réception.

8. Procédé selon la revendication 7, dans lequel le relevé de temps supprimé ne comprend qu'un identifiant d'objet.

9. Appareil (900) de traitement d'un relevé de temps, comprenant :
un module d'ajustement configuré pour ajuster une précision temporelle d'une pluralité de relevés de temps originaux afin d'obtenir une pluralité de relevés de temps intermédiaires correspondant à un même temps, dans lequel chacune des précisions temporelles des relevés de temps originaux est une première précision temporelle, une précision temporelle des relevés de temps intermédiaires est une seconde précision temporelle, et dans lequel la seconde précision temporelle est inférieure à la première précision temporelle ; et
un module de combinaison configuré pour combiner la pluralité de relevés de temps intermédiaires en un seul relevé de temps cible, dans lequel chacun des relevés de temps originaux est un relevé de temps d'un seul objet comprenant un identifiant d'objet, le relevé de temps cible est un relevé de temps multi-objets comprenant une pluralité d'identifiants d'objets, différents identifiants d'objets dans la pluralité de relevés de temps originaux correspondent à des temps différents, et chacun des identifiants d'objets dans le relevé de temps cible correspond au même temps.

10. Appareil (900) selon la revendication 9, dans lequel le module d'ajustement est configuré pour arrondir des temps dans la pluralité de relevés de temps originaux conformément à la seconde précision temporelle, de manière à obtenir la pluralité de relevés de temps intermédiaires.

11. Appareil (900) selon la revendication 9 ou 10, dans lequel une durée correspondant à la seconde précision temporelle est supérieure à une période de mise à jour des relevés de temps originaux.

12. Appareil (900) selon l'une quelconque des revendications 9 à 11, dans lequel la pluralité de relevés de temps originaux se compose de relevés de temps qui sont mis à jour par rapport à des relevés de temps historiques, des identifiants d'objets dans le relevé de temps cible sont des identifiants d'objets dans des relevés de temps qui ne sont pas mis à jour par rapport aux relevés de temps historiques, et dans lequel un nombre d'identifiants d'objets dans les relevés de temps qui sont mis à jour par rapport aux relevés de temps historiques est supérieur à un nombre des identifiants d'objets dans les relevés de temps qui ne sont pas mis à jour par rapport aux relevés de temps historiques.

13. Appareil (900) selon l'une quelconque des revendications 9 à 12, comprenant en outre :
un premier module d'envoi configuré pour envoyer le relevé de temps cible à une extrémité de réception.
